# EUROPÄISCHE PATENTSCHRIFT

(11) **EP 2 883 196 B1**
(45) Veröffentlichungstag und Bekanntmachung des Hinweises auf die Patenterteilung: **19.10.2016**
(21) Anmeldenummer: 13750010.4
(22) Anmeldetag: 02.08.2013
(51) Int. Cl.: G06Q 10/06, G06Q 50/06, H04L 12/24

(54) **VERFAHREN UND VORRICHTUNG ZUR RAUMZEITLICHEN STEUERUNG DER ELEKTROENERGIEAUFNAHME EINES TELEKOMMUNIKATIONSNETZES IN ABHÄNGIGKEIT VON ZUSTÄNDEN DES ENERGIEVERSORGUNGSSYSTEMS**
METHOD AND APPARATUS FOR SPATIOTEMPORAL CONTROL OF THE ELECTRIC POWER DRAW OF A TELECOMMUNICATION NETWORK ON THE BASIS OF STATES OF THE POWER SUPPLY SYSTEM
PROCÉDÉ ET DISPOSITIF POUR LA COMMANDE DANS L'ESPACE ET DANS LE TEMPS DE LA CONSOMMATION D'ÉNERGIE ÉLECTRIQUE D'UN RÉSEAU DE TÉLÉCOMMUNICATION EN FONCTION DES ÉTATS DU SYSTÈME D'ALIMENTATION EN ÉNERGIE

(30) Priorität: 09.08.2012 DE 102012107346
(43) Veröffentlichungstag der Anmeldung: 17.06.2015
(73) Patentinhaber: Deutsche Telekom AG, 53113 Bonn (DE)
(72) Erfinder: LANGE, Christoph, 10318 Berlin (DE); LEHMANN, Heiko, 12587 Berlin (DE)
(74) Vertreter: 2K Patentanwälte Blasberg Kewitz & Reichel
(86) Internationale Anmeldenummer: PCT/EP2013/066260
(87) Internationale Veröffentlichungsnummer: WO 2014/023654

(56) Entgegenhaltungen:
- US-A1- 2008 106 425
- US-A1- 2010 102 936
- US-A1- 2010 145 540

## Beschreibung

Die vorliegende Erfindung bezieht sich allgemein auf die Gebiete Telekommunikation und Energieversorgung. Im Speziellen betrifft die Erfindung die Steuerung der Elektroenergieaufnahme eines verteilten Telekommunikationssystems mit einer Vielzahl steuerbarer Elemente. Im Einzelnen umfasst die Erfindung ein Verfahren und eine Vorrichtung zur raumzeitlichen Steuerung der Elektroenergieaufnahme eines Telekommunikationsnetzes in Abhängigkeit von Zuständen in einem Stromnetz, bzw. Energieversorgungsnetz, das für die Versorgung des Telekommunikationsnetzes in dem Raum und der Zeit zuständig ist, wobei das Stromnetz eine zentrale Stromnetzüberwachungseinheit aufweist, die den Betriebszustand von zumindest einem Teil der Komponenten im Stromnetz überwacht, und das Telekommunikationsnetz eine Telekommunikationssteuereinheit aufweist, die zumindest einen Teil der Telekommunikationsnetzwerkkomponenten im Telekommunikationsnetzwerk steuert.

### Einleitung und Hintergrund der Erfindung

Der Energieverbrauch von Systemen der Informations- und Telekommunikationstechnologie steigt weltweit zurzeit stark an. Hintergrund dieser Entwicklung ist die starke Zunahme von Internetanwendungen in zwei Dimensionen: Zum einen erreicht das Internet eine ständig wachsende Zahl von Nutzern. Hierbei zählen zum Nutzerbegriff auch maschinelle Nutzer, wie etwa fernüberwachte Produktions- oder Sensorsysteme. Zum anderen erhöhen die Anwendungen sowohl ihren Bandbreitenbedarf im Datentransport zwischen verschiedenen räumlich getrennten Komponenten, als auch den Bedarf an maschinellen Berechnungen. Alle genannten Wachstumsphänomene erzeugen ein proportionales Wachstum der durch Telekommunikationsnetze aufgenommenen Energiemenge, wenn ein bedarfsgerechter Ausbau der Netze entsprechend heutiger Architektur- und Systemtechnikparadigmen unterstellt wird. Im Jahr 2007 betrug der IKT-bedingte Energieverbrauch mit 55,4 TWh bereits 10,5% des gesamten Energieverbrauchs in Deutschland. Ohne Gegenmaßnahmen erwartet man bis zum Jahr 2020 einen Anstieg um mehr als 20% auf rund 66,7 TWh [1].

Für die Beschaffung dieser Energie gelten nach den programmatischen Beschlüssen der Bundesregierung vom Sommer 2011 ("Energiewende" [2]) systemisch veränderte Rahmenbedingungen. Insbesondere die Einbeziehung regenerativer Energieträger, wie Solar- und Windenergie in systemrelevanten Größenordnungen (2011 rund 20% Anteil an der Stromversorgung und rund 12% am gesamten Endenergieverbrauch, also inklusive Wärme und Mobilität [3]). führt potentiell zu Verfügbarkeitsschwankungen und Preisrisiken. Folglich müssen qualitativ neue Prozesse wie Energiespeicherung und Lastverschiebung industriell implementiert und gesteuert werden.

Vor diesem Hintergrund liefert das Verfahren und die Anordnung entsprechend der vorliegenden Erfindungsbeschreibung einen Mechanismus für die Steuerung eines großen Verbrauchers von Elektroenergie - nämlich des Telekommunikationsnetzes - in räumlichen und zeitlichen Freiheitsgraden.

### Stand der Technik

Telekommunikationsnetze stellen in der Summe vergleichsweise große elektrische Lasten dar, die zudem über große geographische Flächen verteilt sind, z. B. über das Gebiet eines Staates. Zum Betrieb von derartigen Netzen sind neben der eigentlichen Netztechnik Betriebs- und Büroflächen, sowie weitere unterstützende Funktionen - wie z. B. Klimatisierung der Betriebsräume - notwendig, die ihrerseits einen eigenen Energieverbrauch aufweisen. Im Sinne der hier vorliegenden Erfindungsbeschreibung werden im Energieverbrauch des Telekommunikationsnetzes alle diese Energiebedarfe subsummiert.

Unter dem Begriff Telekommunikationsnetz versteht man die Verbindung von Endgeräten damit man zwischen diesen Informationen austauschen kann.

Beispiele für Telekommunikationsnetze sind ein Telefonnetz und ein Computernetz, IP-Netzwerk.

Die Verbindungen zwischen den Endgeräten können dabei leitungsgebunden oder leitungslos sein. Je nach Art der Verbindung unterscheidet man verschiedene Netzwerktopologien. Innerhalb eines Netzes können jedoch auch verschiedene Topologien verwendet werden: Beim Telefonnetz ist der Teilnehmeranschlussbereich sternförmig mit den Ortsvermittlungsstellen vernetzt, diese jedoch über ein teilvermaschtes Netz untereinander. Über diese Verbindungen können digitale und analoge Informationen übertragen werden. Diese Informationen können ggf. auf höhere Frequenzen aufmoduliert werden. Digitale Informationen können mit einem Leitungscode codiert werden. Die Komponenten, die hierbei neben den Endgeräten Verwendung finden, können unterschiedlicher Art sein, von Basisstation, über Register, Switche, Router, Gateways, Wandler bis hin zu Vermittlungsstellen, Servern, etc. Diese Auflistung ist nur beispielhaft, je nach Technologie können eine Vielzahl von unterschiedlichen Komponenten eingesetzt werden. Diese Komponenten sind je nach Wichtigkeit redundant aufgebaut mit Backup-System und können in unterschiedlichen Betriebszuständen betrieben werden. So können redundante Komponenten zu- und abgeschaltet werden, die Arbeitsgeschwindigkeit angepasst werden, die Übertragungsgeschwindigkeit, die Anzahl der aktiven Komponenten bestimmt werden, d.h. Zuschaltung und Abschaltung von Prozessoren und Komponenten, die vielfach verfügbar sind. Ferner können USVs (Unterbrechungsfreie Stromversorgungen) an- und abgeschaltet werden, so dass ein Betrieb ohne Stromnetzversorgung erfolgen kann. Alle diese Komponenten und deren veränderter Betrieb haben Einfluss auf den Stromverbrauch bzw. Energiebedarf. Die Geräte können zentral, insbesondere auch regional gesteuert werden.

Außerdem enthalten Telekommunikationsnetze Energiespeicherelemente (integraler Teil der USV-Anlagen), die dazu dienen, einen zuverlässigen Netzbetrieb auch dann zu gewährleisten, wenn die Energieversorgung kurzzeitig ausfällt: Die Energiespeicherelemente an Telekommunikationsnetzstandorten dienen nach dem Stand der Technik ausschließlich dazu, eine unterbrechungsfreie Spannungsversorgung für die Elemente des Telekommunikationsnetzes sicherzustellen.

Der Energiebedarf des Telekommunikationsnetzes ist nach heutigem Stand der Technik konstant, wenn ein konkreter Ausbaustand des Netzes zu einem festen Zeitpunkt betrachtet wird: Telekommunikationsnetze werden in ihrer Kapazität so dimensioniert, dass sie einen erwarteten Spitzenverkehrsbedarf - zuzüglich einer Reserve - abdecken können. Diese Netzkapazität steht dann permanent zur Verfügung und bestimmt den Energiebedarf des Netzes. Dieses Verhalten ist bedingt zum einen durch die Hardware-Merkmale der Netzelemente und zum anderen durch die aktuellen Netzbetriebs- und -Steuerungsparadigmen. Demgegenüber fluktuieren tatsächliche Verkehrsbedarfe in Telekommunikationsnetzen zum Teil sehr stark - abhängig vom betrachteten Netzabschnitt, siehe z. B. [4], [5]. Diese Verkehrsschwankungen können in Tagesgängen oder wöchentlichen und jahreszeitlichen Rhythmen beobachtet werden. In Summe wird eine starke Steigerung des zu übertragenden und zu verarbeitenden Verkehrsvolumens in Telekommunikationsnetzen prognostiziert [6], beruhend auf den in der Einleitung genannten Wachstumsfaktoren.

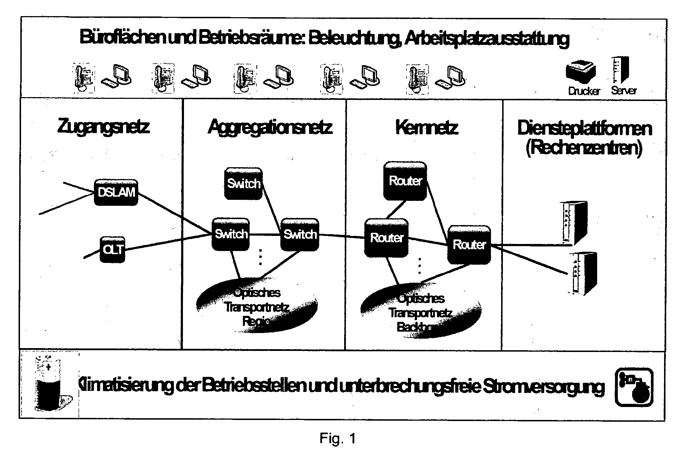

Fig. 1 zeigt schematisch die prinzipiellen Komponenten eines Telekommunikationsnetzes, die entsprechend dem beschriebenen Stand der Technik zum Energieverbrauch gemeinsam beitragen, insbesondere mit den Energiespeicherelementen und den Anlagen zur Raumklimatisierung. Die Energieversorgung des Telekommunikationsnetzes ist den Systemcharakteristika, wie sie durch die Energiewende entstehen, anzupassen. Hierbei sind physikalische Eigenschaften von Regulierungsvorgaben zu unterscheiden. Zur ersten Kategorie gehören:
□Das Volumen der dezentral eingespeisten Energie aus regenerativen Quellen nimmt ständig zu. Hierbei bedingt die natürliche Schwankung des Dargebots (Sonnenscheindauer, Windstärken) eine verschlechterte Planbarkeit der Gesamtversorgung. Großräumige Ausgleichseffekte sind theoretisch nachgewiesen, beruhen jedoch auf einer Infrastruktur, die mittelfristig nicht zur Verfügung stehen wird.
□Dezentrale Einspeisung führt zu Lastflussumkehr, insbesondere im Niederspannungsnetz, zunehmend aber auch in höheren Netzebenen. Durch die große Schwankungsbreite der Energieflüsse folgt hieraus ein Dimensionierungsdilemma für den Leitungsausbau - soll unter hohem CAPEX-Einsatz (Capital Expenditures) auf Spitzenlasten oder investitionsoptimiert auf Mittelwerte hin ausgebaut werden?
□Neben Dimensionierungsfragen für den zukünftigen Ausbau führt die dezentrale Einspeisung in den existierenden Niederspannungsnetzen zu akuten Netzstabilitätsproblemen, z. B. Frequenzhaltung und Blindleistungsbereitstellung betreffend.

Diese physikalischen Eigenschaften können in gleicher Weise in allen nationalen Versorgungssystemen erwartet werden, die auf erneuerbare Energieträger umstellen. Wichtige regulatorisch vorgegebene Eigenschaften jedoch sind nationale Spezifika und nicht ohne Weiteres übertragbar. Hierzu zählen insbesondere folgende Sachverhalte:
□ Das Rollenmodell im Energiemarkt regelt Zuständigkeiten und prototypische Vertragsbeziehungen zwischen den einzelnen Marktteilnehmern. Prinzipiell wird unterschieden in einen Marktbereich, der wettbewerblich organisiert ist und einen regulierten Bereich, in dem Vorgaben des Regulierers gelten. Insbesondere das Wechselverhältnis von regulierten Durchleitungsfunktionen und wettbewerblich organisierter Erzeugung ist hierbei problematisch.
□Die definierten Vorgehensmodelle z. B. zur Einspeise-Rangfolge, zur Fahrplananmeldung eines Bilanzkreises oder der Bereitstellung von Regelenergie sind daraufhin ausgerichtet worden, Stabilität und Berechenbarkeit im Gesamtsystem zu stärken. Diese gelingt jedoch nur in dem Maße, wie die physikalischen Gegebenheiten korrekt abgebildet werden.

Ein Telekommunikationsnetz, das steuerbare Energieverbrauchsstellen, Speicher- und Erzeugungskapazitäten flächendeckend in allen Bereichen des Gesamtversorgungssystems aufweist und in Summe signifikante Anteile des nationalen Gesamtstromverbrauchs verantwortet, ist in besonderer Weise prädestiniert, eine aktive Rolle in der Ausgestaltung der erwähnten Systemcharakteristika zu übernehmen.

Ferner gibt es Stromnetze bzw. Energieversorgungsnetz, die für das Verbundnetz zur Versorgung der Verbraucher durch die Energieversorgungsunternehmen mit elektrischer Energie stehen. Um die Verbraucher mit elektrischer Energie zu versorgen, benötigt man Leitungen von den Stromerzeugern (Kraftwerken und Windkraftanlagen) zu den Verbrauchern. Dazu verwendet man Stromnetze mit verschiedenen, festgelegten Spannungen; bei Wechselstrom sind auch Frequenzen festgelegt. Es gibt hierbei die Stromerzeuger, mit Generatoren, Umspannstationen, Transformatoren und Verteilerstationen. Oft gibt es regionale Bereiche von Verbundnetzen, die von einem oder mehreren Kraftwerken mit Strom versorgt werden. Bei den Netzen gibt es sogenannte Hochspannungs-, Mittelspannungs- und Niederspannungsnetze, wobei letztere in der Regel mit 230-400 V betrieben werden, um die Haushalte zu versorgen. Die Hochspannungsnetze werden in der Regel mit 110 kV betreiben. Um die Verbraucher mit elektrischer Energie zu versorgen, benötigt man Leitungen von den Stromerzeugern (Kraftwerken und Windkraftanlagen) zu den Verbrauchern. Dazu verwendet man Stromnetze mit verschiedenen, festgelegten Spannungen; bei Wechselstrom sind auch Frequenzen festgelegt. Die meisten der Komponenten werden vom Netzbetreiber überwacht, kontrolliert und gesteuert. Dies erfolgt in der Regel auf regionaler Basis, kann jedoch auch landübergreifend erfolgen. Somit kann bei einem Engpass eine Zuschaltung von Kraftwerken außerhalb des Netzes erfolgen. Auch können Überschüsse abgegeben werden. Sollte z.B. eine hohe Menge an Windkraftenergie oder Sonnenkraftenergie zur Verfügung stehen, so kann diese an benachbarte Netze weitergereicht werden. Es ist auch denkbar, dass bei einer Überlast Generatoren abgeschaltet werden. Bei den Netzwerkbetreibern laufen somit die Informationen zusammen, die auch regional betrachtet werden können. So kann von diesen die Auslastung, Überlastung oder auch die Havarie eines Kraftwerks erfragt werden, indem eine digitale Datenübertragung bereitgestellt wird. Als Region wird in diesem Fall ein räumlicher Bereich betrachtet, der im Wesentlichen von den lokalen Energiegeneratoren mit Energie versorgt wird. Energie wird in der Regel nicht über große Distanzen übertragen. Es handelt sich somit um Räume im Bereich von 10-400 km, oder Bundesländer, es kann natürlich auch der Bereich eines Stromnetzbetreibers dadurch abgedeckt sein.

Aus der US 2011/0303431A1 ist ein Telekommunikationsnetz bekannt, das von seiner Energierverbrauchsdimension her einschränkend lokal zu verstehen ist, d.h. es werden nur die elektrischen Lasten der lokalen Netze betrachtet, das Weitverkehrsnetz dient lediglich dem Informationsaustausch. Eine zentrale Steuerungslogik der Energieaufnahme im Telekommunikationsnetz ist hier nicht enthalten.

Aus der US2010/0284287A1 ist ein Verfahren bekannt bei dem durch "Cost of Power" ist ein extern vorgegebener Wert, auf den hin das Routing geändert wird. Das zuständige Strukturelement für die Änderung des Routings ist das "Network Management System", eine klassische Steuerungskompnente des Telekommunikationsnetzes.

### Überblick über die Erfindung:

Das Problem wird gelöst durch ein Verfahren zur raumzeitlichen Steuerung der Elektroenergieaufnahme eines Telekommunikationsnetzes in Abhängigkeit von Zuständen in einem Stromnetz, das für die Versorgung des Telekommunikationsnetzes in dem Raum und der Zeit zuständig ist, wobei das Stromnetz eine zentrale Stromnetzüberwachungseinheit aufweist, die den Betriebszustand von zumindest einem Teil der Komponenten im Stromnetz überwacht und das Telekommunikationsnetz eine Telekommunikationssteuereinheit aufweist, die zumindest einen Teil der Telekommunikationsnetzwerkkomponenten im Telekommunikationsnetzwerk steuert. Es ist zu beachten, dass die Endgeräte in einem Telekommunikationsnetzwerk, wie mobile Endgeräte oder PC bzw. Router bei den Endkunden von Netzbetreiber oftmals nicht unmittelbar durch die Telekommunikationssteuereinheit steuerbar sind, da ein Zugriff nicht gegeben ist. Jedoch kann eine mittelbare Steuerung erfolgen, in dem Knoten, an denen diese Geräte angeschlossen sind, ihre Leistung und Übertragungsrate reduzieren, was ebenfalls beim Endgerät beim Kunden zu einer Reduzierung des Stromverbrauchs beiträgt, da die Geräte mit geringeren Frequenzen und geringerer Geschwindigkeit für bei Verarbeitung der Daten laufen müssen. Eine unmittelbare Steuerung erfolgt in der Regel im Backbone-Bereich, in dem Vermittlungsstellen, Routern, Switchen Basisstation und andere leistungsstarke Systeme angeordnet sind, die für eine Vielzahl von Teilnehmern große Datenmengen transportieren. Diese Komponenten weisen oftmals eine Vielzahl von Prozessoren auf, um parallele Datenverarbeitung vorzunehmen, was die Geschwindigkeit erhöht. Ebenfalls weisen diese Geräte innere Taktraten auf, durch die die Chips in diesen Geräten getaktet werden, die wiederum die Verarbeitungsgeschwindigkeit bestimmen.

Solche Geräte können in der Regel leistungsgesteuert werden, was zu einem geringen Durchsatz führt und ebenfalls den Stromverbrauch reduziert.

Die Stromnetzüberwachungseinheit und Telekommunikationssteuereinheit sind miteinander über ein Netzwerk verbunden, um digital Informationen auszutauschen.

Das Verfahren der vorliegenden Erfindung umfasst die folgenden Schritte:
- Detektion einer Überlastung des Stromnetzes durch zu geringe Stromversorgung in einem räumlichen Bereich, durch Austausch von Informationen zwischen der Stromnetzüberwachungseinheit und der Telekommunikationssteuereinheit, Verringern des Stromverbrauchs des Telekommunikationsnetzwerks in dem räumlichen Bereich, durch Konfiguration der Telekommunikationsnetzwerkkomponenten in diesem räumlichen Bereich durch die Stromnetzüberwachungseinheit für den Zeitraum der geringen Stromversorgung;
   und/oder
- Detektion einer Überlastung des Stromnetzes durch eine zu hohe Stromversorgung durch Austausch von Informationen zwischen der Stromnetzüberwachungseinheit und der Telekommunikationssteuereinheit, Erhöhen des Stromverbrauchs des Telekommunikationsnetzwerks in dem räumlichen Bereich, durch Konfiguration der Telekommunikationsnetzwerkkomponenten in diesem räumlichen Bereich durch die Stromnetzüberwachungseinheit für den Zeitraum der zu hohen Stromversorgung.
   In einer bevorzugten Ausführungsform des Verfahrens, bei dem eine Verringerung des Stromverbrauchs der Telekommunikationsnetzwerkkomponenten erreicht werden soll, kann eine oder mehrere der folgenden Konfigurationen durchgeführt werden.
- Abkoppeln der Telekommunikationsnetzwerkkomponente vom Stromnetz und Betrieb durch eine USV, unterbrechungsfreie Stromversorgung. Aufgrund der Tatsache, dass eine Vielzahl von Komponenten des Telekommunikationsnetzwerk durch eine USV gesichert sind, kann der Energie genutzt werden, um kurzfristig eine Entlastung des Stromnetzes zu erreichen. Eine solche Entlastung führt dazu, dass die Batterie entladen wird, wodurch das Netzwerk nicht genutzt wird. In einer alternativen Ausführungsform kann auch bei großem Kurs voraus, die Energie genutzt werden, um diese direkt in das Stromnetz zurück zu speisen, wenn dadurch nicht der Betrieb des Telekommunikationsnetzwerkes gefährdet wird.
- Verändern eines Routings von Kommunikationsinformationen, um die Kommunikationsinformationen um den räumlichen Bereich herumzuleiten. Hierdurch kann erreicht werden, dass große Datenströme die normalerweise durch das räumliche Gebiet geleitet werden, um dieses Gebiet herum geleitet werden. Insbesondere bei paketorientierten Netzwerken, die in der Regel redundant aufgebaut sind, ist ein solches Verändern des Routings sehr schnell möglich, indem einige wenige Router umgestellt werden, so dass eine Umleitung des Datenverkehrs schnell erfolgen kann und zu einer dauerhaften Reduzierung des Datenverkehrs führen kann. Es ist zu beachten, dass verbindungsorientierte Netzwerke ebenfalls solche Möglichkeiten bereitstellen. Durch die Reduzierung des Datenverkehrs werden in der Regel auch die Übertragungsgeschwindigkeiten der einzelnen Komponenten innerhalb des Gebietes herabgesetzt, ohne dabei im Wesentlichen eine Verminderung der Qualität des Datenverkehrs zu verursachen.
- Abschalten von redundanten Komponenten in den Telekommunikationsnetzwerkkomponenten in dem räumlichen Bereich. Wie bereits oben ausgeführt wurde, weisen die Netzwerkkomponenten oftmals redundante Komponenten, wie Netzwerkanschlüsse, Prozessoren, Arbeitsspeicher etc. auf, die entweder zur Bereitstellung von höheren Verarbeitungsgeschwindigkeiten dienen, oder zur Bereitstellung einer Redundanz im Fehlerfalle. Beide Komponenten können natürlich abgeschaltet werden, um kurzfristig weniger Energie zu benötigen.
- Reduzierung der Übertragungsgeschwindigkeiten in den Telekommunikationsnetzwerkkomponenten in dem räumlichen Bereich. Auch dieser Ansatz wurde bereits oben besprochen, so kann eine Reduzierung der Daten der Übertragungsgeschwindigkeit dadurch erreicht werden, dass eine geringere Bitanzahl pro Sekunde übertragen wird. Dies führt zu deutlich weniger Verarbeitungsaufwand und zu einem langsameren Betrieb der einzelnen Netzwerkkomponenten, was zu einer Einsparung führt.

In einer weiteren Ausführungsform kann durch die Einspeisung von alternativen Energien, zum Beispiel über Windkraftwerke, oder Solaranlagen ein Überschuss an Energienetzwerk vorhanden sein. In einer solchen Situation kann es sinnvoll sein, dass zusätzliche Komponenten aktiviert werden, die besonders energiehungrig sind. So ist auch denkbar, dass bestimmte Aufgaben, die besonders energieintensiv sind, während dieses Zeitraums durchgeführt werden. Solche Aufgaben sind zum Beispiel das Sichern von umfangreichen Daten, die nicht zeitkritisch sind. Auch das Verteilen von Daten wie zum Beispiel Multimediadaten sind mögliche Ansätze, die in diesen Zeitraum fallen. Ebenfalls kann man über Wartungsarbeiten nachdenken, die einen besonders hohen Energieverbrauch besitzen, wie zum Beispiel das Testen von USV-Anlagen mit dem Wiederaufladen von USV-Batterien. Eine Erhöhung des Stromverbrauchs der Telekommunikationsnetzwerkkomponenten kann durch eine oder mehrere der folgenden Konfigurationen erreicht werden:
- Zuschalten von USVs, um diese vollständig aufzuladen. Es ist zum Beispiel denkbar, dass spezifische USV eingerichtet werden, die dann aufgeladen werden, wenn ein hohes Angebot an Energie gegeben ist.
- Verändern eines Routings von Kommunikationsinformationen, um die Kommunikationsinformationen durch den räumlichen Bereich zu leiten;
- Zuschalten von redundanten Komponenten in den Telekommunikationsnetzwerkkomponenten in dem räumlichen Bereich, um den Durchsatz zu erhöhen;
- Erhöhung der Übertragungsgeschwindigkeiten in den Telekommunikationsnetzwerkkomponenten in dem räumlichen Bereich, um den Durchsatz zu erhöhen;
- Aktivierung von Blindlasten.

In einer weiteren möglichen Ausgestaltung erfolgt die Konfiguration in Abhängigkeit von einer zeitlichen Überlastung, wobei die zeitliche Überlastung durch ein Prognose-Modul prognostiziert wird, um die Übelastsituation vorherzusehen, um dadurch die Konfiguration frühzeitig einzuleiten. Dieses Prognose-Modul kann statistische Analysedaten verwenden und Modelle, die auf dem Stand der Technik bekannt sind. Beim Auftreten eines bestimmten Musters können dann vorbereitende Maßnahmen eingeleitet werden, um die Komponenten entsprechend zu steuern. Insbesondere können auch Wetterdaten einfließen, aus denen ersichtlich ist, ob bei großem Sonnenschein oder starken Winden mit einem Überangebot an Energie zu rechnen ist. Ferner kann das Prognose-Modul in einer möglichen Ausführungsform den räumlichen Bereich bestimmen, genauso wie die Zeitdauer und den Umfang einer möglichen Überlastsituation. Es ist zu beachten, dass eine Überlastsituation sowohl bei Bereitstellung von zu viel Energie, als auch bei Bereitstellung von zu wenig Energie gegeben ist. Beide Situationen können für ein Stromnetzwerk kritisch sein.

In einer weiteren Ausführungsform werden durch die Stromnetzüberwachungseinheit und/oder die Telekommunikationssteuereinheit die Betriebsparameter sowohl des Telekommunikations- wie des Stromnetzes als Funktion von Ort x und Zeit t erfasst, um basierend auf dieser Funktion die Detektion vorzunehmen.

In einer weiteren Ausführungsform werden durch die Stromnetzüberwachungseinheit die abgegebene Leistung, Power Quality-Parameter wie Frequenz, Phasenwinkel und ggf. weitere erfasst, um eine Detektion zu ermöglichen.

In einer weiteren Ausführungsform werden in einem Regelkreislauf, bei Überlast weitere Konfigurationen vorgenommen, bis eine Überlast nicht mehr gegeben ist oder ein Betrieb des Telekommunikationsnetzwerkes nicht mehr möglich ist. Hierdurch ist es möglich, zu überprüfen, ob die vorgenommenen Maßnahmen ausreichend waren, um die Überlast abzufangen. Falls diese nicht erfolgreich war, können weitere Schritte eingeleitet werden. Somit ist eine graduelle Steigerung der Schritte denkbar. Aus diesen Schritten und Konfigurationen können dann wiederum durch einen Feedback-Ansatz erlernt werden, wie viel Energie eingespart werden kann, wenn bestimmte Konfigurationen vorgenommen wurden. Es ist somit möglich die Konfigurationen zu klassifizieren, indem deren Einsparungspotenzial und die Schnelligkeit der Umsetzung erfasst werden. Weitere Aspekte können die Langfristigkeit der Konfigurationen darstellen. Das Aktivieren einer USV ist in der Regel lediglich eine kurzfristige Konfiguration, die im Zeitfenster von Minuten bis zu wenigen Stunden zu einer Entlastung des Stromnetzes führt. Eine dauerhafte Entspannung ist dadurch nicht zu erreichen. Die Reduzierung der Übertragungsgeschwindigkeit bzw. der Bandbreitenreduktion hingegen führt in der Regel zu einer langfristigeren und dauerhaften Reduzierung des Stromverbrauchs. In Abhängigkeit der Prognose und der Situation können entsprechende Schritte und Konfigurationen eingeleitet werden.

In einem weiteren Ansatz wird vor der Durchführung einer Konfiguration geprüft, ob die Überlast ausreichend durch eine Veränderung der Konfiguration vermieden werden kann, und wenn dies nicht der Fall ist, so wird keine neue Konfiguration vorgenommen. Dies hat den Vorteil, dass im Falle eines Notfalls, die USV-Komponenten noch vollständig genutzt werden können.

Ein weiterer Teil der Erfindung ist System umfassend eine Telekommunikationssteuereinheit zur raumzeitlichen Steuerung der Elektroenergieaufnahme eines Telekommunikationsnetzes in Abhängigkeit von Zuständen in einem Stromnetz, das für die Versorgung des Telekommunikationsnetzes in dem Raum und der Zeit zuständig ist, wobei das Stromnetz eine zentrale Stromnetzüberwachungseinheit aufweist, die den Betriebszustand von zumindest einem Teil der Komponenten im Stromnetz überwacht,wobei die Telekommunikationssteuereinheit ausgebildet ist, um zumindest einen Teil der Telekommunikationsnetzwerkkomponenten im Telekommunikationsnetzwerk zu steuern, wobei die Stromnetzüberwachungseinheit und die Telekommunikationssteuereinheit miteinander über ein Netzwerk verbunden sind, um digital Informationen auszutauschen, wobei das System ausgebildet ist, um bei
- Detektion einer Überlastung des Stromnetzes durch zu geringe Stromversorgung in einem räumlichen Bereich, durch Austausch von Informationen zwischen der Stromnetzüberwachungseinheit und der Telekommunikationssteuereinheit, ein Verringern des Stromverbrauchs des Telekommunikationsnetzwerks in dem räumlichen Bereich steuerbar ist, durch Konfiguration der Telekommunikationsnetzwerkkomponenten in diesem räumlichen Bereich für den Zeitraum der geringen Stromversorgung;
   und/oder um bei
- Detektion einer Überlastung des Stromnetzes durch eine zu hohe Stromversorgung durch Austausch von Informationen zwischen der Stromnetzüberwachungseinheit und der Telekommunikationssteuereinheit, ein Erhöhen des Stromverbrauchs des Telekommunikationsnetzwerks in dem räumlichen Bereich steuerbar ist, indem durch Konfiguration der Telekommunikationsnetzwerkkomponenten in diesem räumlichen Bereich für den Zeitraum der zu hohen Stromversorgung, die Netzwerkkomponenten mehr Energie verbrauchen.

Der entscheidende Vorteil, den die Erfindung in Bezug auf das Smart Grid bietet, ist die koordinierte Steuerung eines netzartig ausgeprägten Verbrauchers mit integrierten Speicherkapazitäten. Die netzartige Struktur des Verbrauchs ermöglicht, das hierarchische Niveau zu wählen, auf dem eine Lastverschiebung oder eine Speicherdienstleistung definiert wird. Dieses kann prinzipiell zwischen einer "mikroskopischen" Ebene - der Ebene der Letztverbraucher, also etwa Einfamilienhäusern - und einer "makroskopischen" Ebene - gegeben etwa durch einen Bilanzkreis oder eine Regelzone - changieren. Hierbei ist zu beachten, dass Instabilitäten auf einer niedrigen Hierarchieebene u. U. mit geringem Aufwand beseitigt werden können (z. B. Zwischenpuffern von photovoltaischer Einspeiseleistung noch im Niederspannungsbereich), während der Reparaturaufwand deutlich anwächst, wenn solche Instabilitäten in höhere Netzebenen weitergereicht werden. Entscheidendes Merkmal der Erfindung ist ein zentrales Steuerungssystem, das diese hierarchisch aufgelösten Handlungsfreiheiten zulässt. In der folgenden Tabelle sind diese beispielhaft aufgelistet.

| Bezugsebene | Beispielmechanismus | Adressat der Dienstleistung | Verhalten der Steuerung |
|---|---|---|---|
| Niederspannung s-ebene | Zwischenpuffern von nicht vorhersagbarer Einspeiseleistung erneuerbarer Energieträger | Verteilnetz -betreiber (VNB) | Über eine Schnittstelle triggert ein VNB-Diagnosesyste m die Zuweisung von lokal identifiziert en Speicherresso urcen. |
| Mittelspannung s-ebene | Kritische Lastzustände von Netzbereichen können stabilisiert werden, indem für eine rechnerisch bestimmte Laufzeit die Telekommunikationsanlag en über die internen Speicher versorgt werden oder zusätzlich Netztechnik | Verteilnetz -betreiber (VNB), Bilanzkreis - koordinator | Über eine Schnittstelle teilt das VNB-Diagnosesystem den räumlichen Querschnitt und die Amplitude der kritischen Last mit. Die Steuerung |
| | abgeschaltet wird. | | ermittelt de raumzeitliche Dimensionieru ng des potentiellen Lastabwurfs und stellt die Speichersteue rung sowie ggf. die Steuerung der Netztechnik entsprechend ein. |
| Hochspannungsebene | Ressourcen aus netztechnischem Lastabwurf und Speicherkapazitäten werden zu einem Virtuellen Regelkraftwerk zusammengeschaltet, das dem ÜNB für Regelenergiebereitstell ung zur Verfügung steht. | Übertragung s-netzbetreib er (ÜNB) | Regelenergieb ereitstellung verlangt genau definierte Präqualifizie rungen, die in der Steuerung abgebildet sind. Ebenso ist der genau definierte Ablauf des Regelfalls in der Steuerung hinterlegt. |

Die Bereitstellung von Regelenergie ist in der Verantwortung des Übertragungsnetzbetreiber (ÜNB) und in eine Kaskade von Primär-, Sekundär- und Tertiärregelung unterteilt. Exemplarisch sei die Sekundärregelung betrachtet: im Zeitfenster zwischen 15 Minuten bis zu einer Stunde nach Eintritt des Regelfalls erfolgt positive oder negative Leistungsbereitstellung je nach Abweichung von tatsächlichem Bedarf und angemeldetem Fahrplan. Bezugsgröße hierbei ist die Regelzone (Deutschland hat vier Regelzonen). Die Zusammenschaltung aller in das Telekommunikationsnetz integrierten Regelgrößen (USV-Anlagen auf- oder entladen, Verbraucher an- oder abschalten), die sich in der betreffenden Regelzone befinden, ergibt in Summe eine Regelleistung, die dem ÜNB zur Verfügung gestellt werden kann. Der Organisationsrahmen hierfür sind das in der Erfindung beschriebene Verfahren und die Anordnung.

Das entscheidende technische Unterscheidungsmerkmal der Erfindung besteht in der Steuerungsarchitektur, die erlaubt, das verteilte Gesamtensemble von steuerbaren Verbrauchern und Speichereinheiten räumlich und zeitlich aufgelöst auf verschiedene Nutzungsszenarien hin selektiv zusammenzuschalten und zu steuern. Zu diesem Zweck enthält das Steuerungssystem ein Monitoringmodul, ein Prognosemodul und einen Optimierungsalgorithmus. Der Optimierungsalgorithmus ist ferner über Parameter konfigurierbar, so dass eine Prioritätensteuerung für die verschiedenen Nutzungsszenarien a priori eingestellt werden kann.

### Figurenbeschreibung:

Im folgenden werden die Figuren beschrieben, die spezifissche Darstellungen für mögliche Ausführungsformen sind, und die Anmeldung nicht beschränken sollen.
Fig. 1 Prinzipanordnung eines Telekommunikationsnetzes mit typischen Verbrauchern (Netztechnik, Büro- und Betriebsräume, Klimatisierung der Betriebsstellen und Anlagen zur unterbrechungsfreien Stromversorgung)
Fig. 2 Schematisches Wirkungsprinzip der Steueranordnung entsprechend der vorliegenden Erfindung
Fig. 3 Umschaltung der Netztopologie von einem Normalbetriebszustand in einen "Not"-Betriebszustand in einer Region, die durch einen Engpass im Energieangebot betroffen ist

### Beschreibung einer Ausführungsform

Im Folgenden erfolgt eine Beschreibung des Wirkungsprinzips der Erfindung.

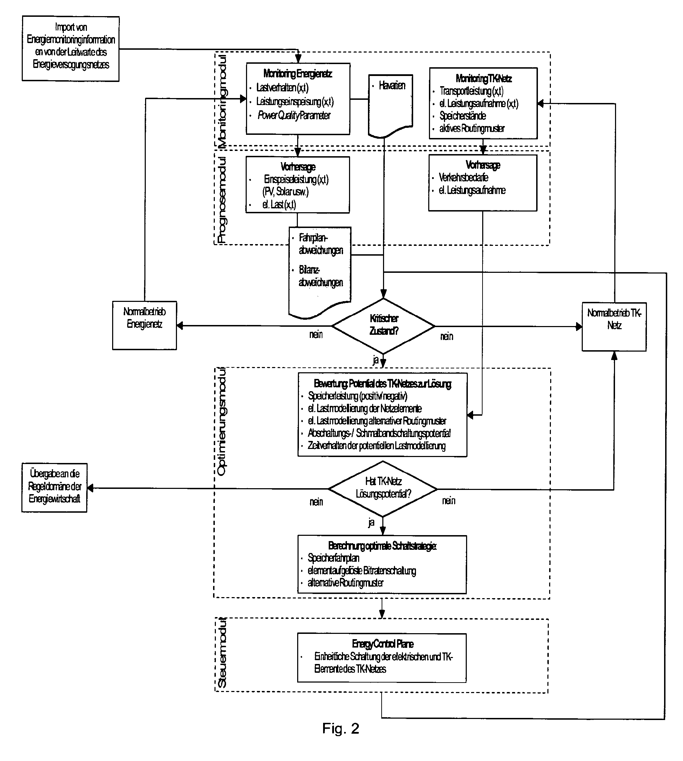

Fig. 2 zeigt schematisch das Wirkungsprinzip der Steuerung entsprechend der vorliegenden Erfindung; dieses wird nun detailliert beschrieben und mit Ausführungsbeispielen illustriert.

Kernstück der vorliegenden Erfindung ist ein einheitliches, globales Steuerungssystem für die Bandbreitenproduktion im Telekommunikationsnetz, das Management der Energiespeicher im Telekommunikationsnetz und der Energieaufnahme des Telekommunikationsnetzes aus dem Versorgungsnetz des Energienetzbetreibers. Das Steuerungssystem enthält folgende Module mit den im Weiteren beschriebenen Merkmalen:
□ Monitoringmodul: Das Monitoringmodul erfasst sowohl die Betriebszustände im Telekommunikationsnetz hinsichtlich der Verkehrs- bzw. Bandbreitenbedarfe und der in einem lastadaptiv arbeitenden Netz damit assoziierten Leistungsaufnahme als auch die Zustände hinsichtlich erzeugter und verfügbarer Energiemengen im Energieversorgungsnetz. Im Telekommunikationsnetz kann der Verkehr kann an wesentlichen Punkten im Netz gemessen werden. Z. B. können Verkehrsbedarfe und damit assoziierte Leistungsaufnahmen auch in (zukünftigen) Netzelementen erfasst und gespeichert werden - derartige Mechanismen befinden sich gerade in der Standardisierung.
   Im Energieversorgungsnetz ist das Monitoring im Stromnetz gängige Praxis. An geeigneten Punkten im Netz meist in den höher aggregierten Spannungsebenen werden Leistung, Blindleistung, Stromflüsse, Phasenwinkel und Frequenz gemessen (zunehmend werden auch Ober- und Unterschwingungen der Netzfrequenz wichtig zur Stabilitätscharakterisierung des Netzes). Ein Auseinanderscheren von Bedarf und Versorgung äußert sich in einer Frequenzdrift.
□ Prognose-Modul: Das Prognose-Modul prognostiziert zeit- und ortsaufgelöst Datenverkehrsbedarfe, damit assoziierte Leistungsaufnahmen und -bedarfe im Telekommunikationsnetz und ebenso die verfügbaren Energiemengen aus der Energieerzeugung im Energieversorgungsnetz. Von besonderer Wichtigkeit ist dabei die Berücksichtigung unterschiedlicher Zeitskalen, die von wenigen Millisekunden (Ab- und Anschaltung von Telekommunikationsnetzressourcen) bis hin zu Tagen (Energiemengen und Energiepreise) reichen können. Basierend auf vorliegenden Informationen aus der Vergangenheit (Verkehrsmengen, Energiebedarfe, Energiepreise etc.) wird mit Hilfe statistischer Verfahren das zukünftige Verhalten prognostiziert. Weiterer wichtiger Bestandteil der Prognose ist die wetterabhängige Angebotsprognose für die Verfügbarkeit regenerativer Energien (Wind und Sonne), die in der Art eines Wetterberichts erstellt wird (Simulationsrechnung ausgehend von Messwerten). Das Prognosemodul kombiniert demzufolge statistische Auswertungen mit aktuellen Messwerten und einem Simulationssystem.
□Optimierungsmodul (Algorithmisches Verfahren zur Steuerung): Der Optimierungskern des Steuerungssystems kann die verkoppelten Systeme Telekommunikationsnetz und Energieversorgungsnetz nach unterschiedlichen Kostenfunktionen optimieren. Beispiele hierfür sind:
   ∘ Minimierung der CO2-Emissionen
   ∘ Betriebswirtschaftliche Optimierung für den Telekommunikationsnetzbetreiber
   ∘ Betriebswirtschaftliche Optimierung für das Energieversorgungsunternehmen, insbesondere günstige Bereitstellung von Reserveenergie
   ∘ Optimierung hinsichtlich der Stabilität des Energieversorgungsnetzes
   o Volkswirtschaftliche Optimierung (hier: Unabhängigkeit von Energieimporten)
□ Steuermodul: Das Steuermodul steuert die einzelnen Netzkomponenten in Telekommunikations- und Energieversorgungsnetz entsprechend des Ergebnisses der Optimierung durch das algorithmische Optimierungsverfahren. Es besteht aus einer zentralen Instanz, die über geeignete Protokolle und Schnittstellen auf die lokalen Instanzen einwirken kann. Zur lokalen Steuerung von Speicherelementen, die als USV-Anlagen ausgelegt sind, ist eine spezielle Controller-Architektur zu implementieren.

Insbesondere wird die Entscheidungsfindung sowohl im Telekommunikations- als auch im Energieversorgungsnetz hierarchisiert nach den verschiedenen Netzebenen ablaufen. Das Monitoringmodul liefert eine räumliche Ausdehnung der detektierten Störung. Das Prognosemodul trifft eine Aussage über das wahrscheinliche Verhalten dieser Störung in Raum und Zeit. Das Optimierungsmodul überprüft die Einwirkungsmöglichkeiten, die den elektrischen Elementen des Telekommunikationsnetzes zur Verfügung stehen und entscheidet dann über die optimale Reaktion. Hierbei gilt, wie oben beschrieben, das in der niedrigstmöglichen Netzebene gehandelt wird: Ein kritischer Spannungsabfall oder - anstieg in einem Ast eines sternförmigen Verteilungsnetzes z.B. wird nach Möglichkeit von einer einzigen USV-Anlage in eben diesem Ast aufgefangen. Sollte eine solche Anlage nicht zur Verfügung stehen, wird die nächsthöhere Hierarchieebene gewählt und eine Aktion angestoßen.

Das Verfahren entsprechend Fig. 2 läuft folgendermaßen ab: Das Monitoringmodul erfasst Betriebsparameter sowohl des Telekommunikations- wie des Energieversorgungsnetzes als Funktion von Ort x und Zeit t. Betriebsparameter sind dabei die eingespeiste Leistung, das Lastverhalten (abgegebene Leistung), Power Quality-Parameter (wie z. B. Frequenz, Phasenwinkel etc.) sowie weitere geeignete Kennzahlen. Außerdem werden externe Informationen von der Leitwarte des Energieversorgers einbezogen. Für das TK-Netz werden ebenso Betriebsparameter erfasst. Dies sind die Transportleistung (die Bitrate bzw. Bandbreite, die elektrische Leistungsaufnahme, Energiespeicherstände, aktivierte Routingmuster sowie weitere geeignete Messgrößen, jeweils als Funktion von Ort x und Zeit t. Das jeweils zugeordnete Prognosemodul sagt basierend auf statistischen Algorithmen die beschriebenen Betriebsparameter - aufgelöst nach x und t - vorher. Eine Komponente entsprechend des vorgeschlagenen Verfahrens überprüft zyklisch, ob im Energieversorgungsnetz ein kritischer Zustand erreicht wird: Dies kann sowohl ein Ereignis sein, das Monitoring- oder Prognosemodul erkennt, als auch beispielsweise eine Havarie. Die eingesetzten Algorithmen bestehen aus einer Kombination von deterministischen Gleichungen (sog. Bewegungsgleichungen) und empirisch gefundenen wahrscheinlichen Fortsetzungen gemessener Zustände ohne Kenntnis der treibenden Kräfte. Eingangsgrößen der Bewegungsgleichungen sind etwa die berechnete Verlaufskurve der Datenverkehrsstärken im TK-Netz, die Verfügbarkeitsprognose regenerativer Energieträger, die statistisch wahrscheinlichste Entwicklung der elektrischen Last (basierend auf den angemeldeten Fahrplänen der Bilanzkreisverantwortlichen). Diese treibenden Größen ermöglichen es, die Fortentwicklung einer minimalen Störung mathematisch zu berechnen. Ein empirisches Verfahren hingegen setzt einen detektierten Zustand auf Basis statistischer Verfahren in die Zukunft fort. Die eingesetzten Algorithmen kombinirne beide Ansätze. Mit Havarie ist hier ein Ereignis gemeint, dass von außen auf das Netz einwirkt (z. B. durch Unwetter, Naturkatastrophe usw.) und so nicht durch das Prognosemodul vorhergesagt werden kann. Wird kein kritischer Zustand erkannt, so verbleiben sowohl Energieversorgungs- als auch TK-Netz im Normalbetriebsmodus. Wird jedoch ein kritischer Zustand erkannt bzw. mit Hilfe der Algorithmen des Prognosemoduls vorhergesagt, so bewertet das Optimierungsmodul zunächst das Lösungspotential, das bei Einbeziehung des TK-Netzes zur Verfügung steht. Dabei werden die Energiespeicherstände ausgewertet, alternative Routingmuster berechnet und bewertet und ebenso errechnet, welches Potential Schmalband-TK-Netzbetrieb oder eine partielle Abschaltung bietet. Wichtig hierbei ist die Einbeziehung der Zeitskalen: Das Potential des TK-Netzes zur Lösung eines kritischen Zustandes hängt von seiner Zeitdauer ab. Wird das Potential des TK-Netzes als nicht ausreichend für den vorliegenden kritischen Zustand bewertet, so verbleibt das TK-Netz im Normalbetrieb und die Problembehebung wird an die Regeldomäne der Energiewirtschaft übergeben.

Wird anderenfalls das Potential des TK-Netzes zur Behebung des kritischen Zustandes als ausreichend bewertet, wird das TK-Netz entsprechend konfiguriert: Beispiele sind Umkonfiguration des Routingmusters, elementaufgelöste Bitratenschaltung usw. Bei einer elementaufgelösten Bitratenschaltung wird nicht Netz-weit umkonfiguriert sondern z. B. nur ein Netzelement in einen "low-power"-Modus schaltet - bzw. ein Netzelement und die zugehörige Gegenstelle (z. B. beim DSL). Es wird also nicht das ganze Netz umkonfiguriert. Bei der Umkonfiguration des Routingmusters ist das anders, da wird ggf. eine große Anzahl von Knoten beeinflusst und so konfiguriert, dass Verkehr um z. B. einen bestimmtem Knoten herumgeleitet wird, der gerade nicht genutzt werden soll (wie oben beschrieben).

Die Energy Control Plane des Steuermoduls übernimmt dann die eigentliche Schaltung der TK-Netzelemente in den geforderten passenden Modus (Bitrate, Routingmuster).

Diese Optimierung wird so lange weitergeführt, bis der kritische Zustand nicht weiter fortbesteht - oder das Lösungspotential des TK-Netzes nicht ausreicht und dann an die Regeldomäne der Energiewirtschaft übergeben werden muss.

Im Folgenden werden einige Szenarien beschrieben.

Szenario 1: Mittelfristiger Betrieb des Telekommunikationsnetzes mit reduzierter Kapazität zur Verringerung seines Leistungsbedarfs in einem definierten Energieversorgungsgebiet.

In diesem Ausführungsbeispiel bzw. Anwendungsfall wird folgendes Szenario betrachtet: Fällt in einer Regelzone z.B. ein Kraftwerksblock aus, kann durch Absenken der Leistungsaufnahme des Telekommunikationsnetzes - in bestimmten Grenzen - darauf verzichtet werden, teure und ineffiziente Reservekraftwerke zuzuschalten. Steht also in einem begrenzten geographischen Gebiet weniger elektrische Leistung im Energieversorgungsnetz zur Verfügung, als zu der Zeit gewöhnlich dort benötigt wird, besteht so die Möglichkeit, das Energieversorgungsnetz dadurch zu stabilisieren, dass der elektrische Verbrauch des Telekommunikationsnetzes dadurch verringert wird, dass in einen Modus mit verringerter Bandbreite geschaltet wird - was in einem lastadaptiv (und im besten Fall leistungsproportional) arbeitenden Telekommunikationsnetz zu einem entsprechenden Rückgang der aufgenommenen Leistung führt. Das Prognosemodul gibt eine Schätzung für die räumliche und zeitliche Störwirkbreite des Leistungsabfalls ab. Der Optimierungskern vergleicht diese Daten mit dem adressierbaren Lastabwurfpotential und gibt einen Schaltungsvorschlag aus, der die optimale Lösung realisiert. Dieser beinhaltet auch das Re-Routing von Telekommunikationsverkehren aus dem betroffenen Gebiet heraus als weiteren Freiheitsgrad des Lastabwurfs. So wird vom normalen Breitbandbetrieb in einen Schmalbandbetrieb mit geringerer und räumlich verlagerter Leistungsaufnahme geschaltet: Es kann dann über eine begrenzte Zeit zunächst Leistung aus den dem Telekommunikationsnetz eigenen Energiespeichern entnommen werden, so dass in dieser durch die Batteriekapazität bestimmten Zeit keine Leistung aus dem Energieversorgungsnetz entnommen werden muss. Besteht die Störung anschließend immer noch, kann im Schmalbandbetrieb wieder Leistung aus dem Energieversorgungsnetz entnommen werden, die immer noch signifikant unter der im Breitbandbetrieb aufgenommenen Leistung liegt. Bei Wiederherstellung der vollen Leistungsfähigkeit des Energieversorgungsnetzes wird dann wieder zu einem - normalen - Breitbandbetrieb im Telekommunikationsnetz zurückgekehrt.

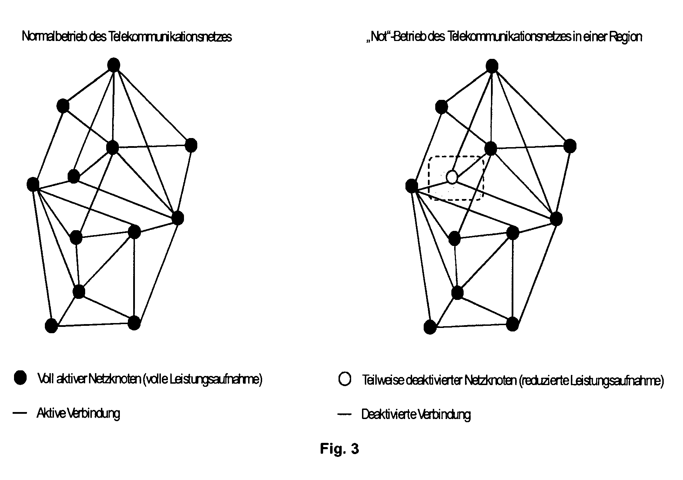

Fig. 3 zeigt ein spezielles Anwendungsbeispiel, bei dem die Wegefindung (das Routing) in einem - vermaschten - Netz als Freiheitsgrad im Sinne der obigen Darstellung herangezogen wird: Im linken Teil der Abbildung ist das Netz im Normalbetrieb gezeigt, bei dem alle Knoten und Verbindungen bei voller (normaler) Kapazität und Leistungsaufnahme arbeiten. Auf der rechten Seite der Abbildung ist das gleiche Netz bei einer Verknappung des Energieangebots in der gekennzeichneten Region dargestellt: Es werden nun alle Verbindungen - bis auf eine verbleibende - zu dem betreffenden Netzknoten deaktiviert und der Knoten wird in seiner Kapazität - und Leistungsaufnahme - soweit heruntergefahren, dass er nur noch Verkehrsbedarfe bearbeiten muss, die in der ihm unmittelbar zugeordneten Versorgungsregion entstehen oder dort ihren Bestimmungsort haben. Alle anderen Verkehre - z. B. Transitverkehre -, die im Normalbetrieb auch über diesen Knoten laufen würden, werden über alternative Wege im Netz geschickt, so dass der Energiebedarf in dieser Region zur Stabilisierung des Energieversorgungsnetzes gesenkt werden kann.

Szenario 2: Kurzfristige Lastspitzenkappung in einem Verteilnetz.

Dieses Beispiel geht von einer räumlich und zeitlich deutlich geringeren Störwirkbreite aus als im Szenarium 1. Die Steuerbarkeit der elektrischen Leistungsaufnahme des Telekommunikationsnetzes wird hier dem Verteilnetzbetreiber zur Verfügung gestellt, ohne in die regelzonenbezogenen Abläufe zur Reserveenergiebereitstellung einzugreifen. Die Kurzfristigkeit der Störung, die vom Prognosemodul erkannt wird, hat zur Folge, dass die Antwort des Optimierungsmoduls eine mögliche Schmalbandschaltung der Telekommunikation mit weiteren Aktionen komplementiert. Je nach Höhe der Fahrplanabweichung kann entschieden werden, aus den Elektroenergiespeichern der USV-Anlage Rückspeisungen in das örtliche Versorgungsnetz vorzunehmen. In diesem Fall haben die Speicher sowohl die Versorgung der elektrischen Anlagen des Telekommunikationsnetzes zu leisten, als auch eine zu bestimmende elektrische Leistung in das örtliche Verteilnetz zurück zu speisen. Dies ist offensichtlich nur über einen begrenzten Zeitraum möglich und stellt besondere Anforderungen an die lokale Controller-Architektur. Der zeitliche Verlauf ist daher vom Monitoring-, Prognose- und Optimierungsmodul ständig daraufhin zu untersuchen, ob die Begrenzung der Störungsbehandlung auf die Verteilnetzebene aufrechterhalten werden kann, oder eine regelzonenweite Reserveenergiebeschaffung angestoßen werden muss. Dies würde den Übergang in Szenarium 1 bedeuten, für das jetzt allerdings die speicherbasierten Kurzfristkomponenten des Lastabwurfs nicht mehr zur Verfügung stünden.

Szenario 3: Überkritische dezentrale Einspeisung in Verteilnetzen.

Dieses Szenarium hat das Management dezentral eingespeister erneuerbarer Energien zum Gegenstand. Diese wird nur dann zum Problem oder Störfall, wenn die der Fahrplanberechnung zugrundeliegende raum-zeitliche Prognose von photovoltaisch erzeugter oder Windenergie stark von der Realität abweicht. Aufgrund des komplexen Charakters von Wettersystemen ist mit solchen Vorhersagefehlern auch in Zukunft zu rechnen. Im Falle stark nach oben abweichender Einspeisung besteht eine Instabilitätsgefahr - insbesondere für das Verteilnetz (Windenergie wird üblicherweise in die Netzebenen höherer Spannung eingespeist). Weist ein Verteilnetz zudem eine Topologie mit einem geringen Vermaschungsgrad auf, verstärkt sich diese Instabilitätsgefahr. Die vorliegende Erfindung würde in einem solchen Fall mit dem eigenen Prognosemodul (das auf einer kürzeren Zeitskala arbeitet, als die oben zitierte Wettervorhersage) die Instabilitätsgefahr für das Verteilnetz raum-zeitlich aufgelöst analysieren. Der Optimierungsalgorithmus berechnet dann die optimalen Aktionen der zur Verfügung stehenden Elemente - diese umfassen lokale Zwischenspeicherung von Elektroenergie oder z.B. Blindleistungsbereitstellung. Das Steuermodul setzt diese Aktionen dann auf Elementebene um. Es ist zu beachten, dass eine Zwischenspeicherung zur Verfügung stehende Speicherkapazitäten voraussetzt. Der Erfolg einer kurzfristigen Aktion hängt also vom mittelfristigen Steuerungsregime ab, das aus statistischen und technoökonomischen Analysen gemeinsam mit den Stakeholdern der Energieversorgung zu entwickeln ist.

### Literatur und Quellen

[1] Fraunhofer-Institut für Zuverlässigkeit und Mikrointegration (IZM); Fraunhofer-Institut für System- und Innovationsforschung (ISI): *Abschätzung des Energiebedarfs der weiteren Entwicklung der Informationsgesellschaft.* Abschlussbericht an das Bundesministerium für Wirtschaft und Technologie: Berlin, Karlsruhe, März 2009
[2] Die Bundesregierung der Bundesrepublik Deutschland: http://www.bundesregierung.de/Content/DE/Artikel/2011/06/2011-06-06-energiewende-kabinett-weitere-informationen.html
[3] Bundesministerium für Umwelt, Naturschutz und Reaktorsicherheit, Pressemitteilung Nr. 170/11, 29.12.2011, http://www.erneuerbare-energien.de/pressemitteilungen/aktuelle_pressemitteilungen/pm/4 8231.php
[4] http://www.de-cix.net/about/statistics/
[5] v. Eimeren, B.; Frees, B. (2010). Fast 50 Millionen Deutsche online - Multimedia für alle?" Media Perspektiven, 7-8, 334-349. [Online, März 2012]. Verfügbar: http://www.ard-zdf-onlinestudie.de/fileadmin/Online10/07-08-2010_van_Eimeren.pdf
[6] Cisco Visual Networking Index: *Forecast and Methodology, 2010-2015.* [Online, März 2012]. Verfügbar: http://www.cisco.com/en/US/solutions/collateral/ns341/ns525/ns5 37/ns705/ns827/white_paper_c11-481360_ns827_Networking_Solutions_White_Paper.html

## Patentansprüche

1. Verfahren zur raumzeitlichen Steuerung der Elektroenergieaufnahme eines Telekommunikationsnetzes in Abhängigkeit von Zuständen in einem Stromnetz, das für die Versorgung des Telekommunikationsnetzes in dem Raum und der Zeit zuständig ist, wobei das Stromnetz eine zentrale Stromnetzüberwachungseinheit aufweist, die den Betriebszustand von zumindest einem Teil der Komponenten im Stromnetz überwacht, und das Telekommunikationsnetz eine Telekommunikationssteuereinheit aufweist, die zumindest einen Teil der Telekommunikationsnetzwerkkomponenten im Telekommunikationsnetzwerk steuert, wobei die Stromnetzüberwachungseinheit und die Telekommunikationssteuereinheit miteinander über ein Netzwerk verbunden sind, um digital Informationen auszutauschen, **gekennzeichnet durch** die folgenden Schritte:
- Bei Detektion einer Überlastung des Stromnetzes **durch** eine zu hohe Stromversorgung **durch** Austausch von Informationen zwischen der Stromnetzüberwachungseinheit und der Telekommunikationssteuereinheit, Erhöhen des Stromverbrauchs des Telekommunikationsnetzwerks in dem räumlichen Bereich, **durch** Konfiguration der Telekommunikationsnetzwerkkomponenten in diesem räumlichen Bereich **durch** die Stromnetzüberwachungseinheit für den Zeitraum der zu hohen Stromversorgung.

2. Verfahren nach dem vorhergehenden Anspruch, wobei bei Detektion einer Überlastung des Stromnetzes durch zu geringe Stromversorgung in einem räumlichen Bereich, durch Austausch von Informationen zwischen der Stromnetzüberwachungseinheit und der Telekommunikationssteuereinheit, Verringern des Stromverbrauchs des Telekommunikationsnetzwerks in dem räumlichen Bereich, durch Konfiguration der Telekommunikationsnetzwerkkomponenten in diesem räumlichen Bereich durch die Stromnetzüberwachungseinheit für den Zeitraum der geringen Stromversorgung;
und

3. Das Verfahren nach einem oder mehreren der vorhergehenden Ansprüche, **dadurch gekennzeichnet, dass** eine Verringerung des Stromverbrauchs der Telekommunikationsnetzwerkkomponenten erreicht werden kann durch eine oder mehrere der folgenden Konfigurationen:
- Abkoppeln der Telekommunikationsnetzwerkkomponente vom Stromnetz und Betrieb durch eine USV, unterbrechungsfreie Stromversorgung;
- Einspeisen von USV-Energie in das Stromnetz;
- Verändern eines Routings von Kommunikationsinformationen um die Kommunikationsinformationen um den räumlichen Bereich herumzuleiten;
- Abschalten von redundanten Komponenten in den Telekommunikationsnetzwerkkomponenten in dem räumlichen Bereich;
- Reduzierung der Übertragungsgeschwindigkeiten in den Telekommunikationsnetzwerkkomponenten in dem räumlichen Bereich.

4. Das Verfahren nach dem vorhergehenden Anspruch 1, **dadurch gekennzeichnet, dass** eine Erhöhung des Stromverbrauchs der Telekommunikationsnetzwerkkomponenten, erreicht werden kann durch eine oder mehrere der folgenden Konfigurationen:
- Zuschalten von USVs, um diese vollständig aufzuladen; - Verändern eines Routings von Kommunikationsinformationen um die Kommunikationsinformationen durch den räumlichen Bereich zu leiten;
- Zuschalten von redundanten Komponenten in den Telekommunikationsnetzwerkkomponenten in dem räumlichen Bereich;
- Erhöhung der Übertragungsgeschwindigkeiten in den Telekommunikationsnetzwerkkomponenten in dem räumlichen Bereich;
- Aktivierung von Blindlasten.

5. Das Verfahren nach einem oder mehreren der vorhergehenden zwei Ansprüche, wobei die Auswahl der Konfiguration von einer zeitlichen Überlastung abhängig ist, wobei die zeitliche Überlastung durch eine Prognosemodul prognostiziert wird, um die Überlastsituation vorherzusehen, um dadurch die Konfiguration frühzeitig einzuleiten, insbesondere wobei das Prognosemodul ebenfalls den räumlichen Bereich vorhersagt.

6. Das Verfahren nach einem oder mehreren der vorhergehenden Ansprüche, wobei die Stromnetzüberwachungseinheit und/oder die Telekommunikationssteuereinheit die Betriebsparameter sowohl des Telekommunikations- wie des Stromnetzes als Funktion von Ort x und Zeit t erfasst, um basierend auf dieser Funktion die Detektion vorzunehmen.

7. Das Verfahren nach einem oder mehreren der vorhergehenden Ansprüche, wobei die Stromnetzüberwachungseinheit die abgegebene Leistung, Power-Quality-Parameter, wie Frequenz, Phasenwinkel, erfasst, um eine Detektion zu ermöglichen.

8. Das Verfahren nach einem oder mehreren der vorhergehenden Ansprüche, wobei in einem Regelkreislauf, bei Überlast weitere Konfigurationen vorgenommen werden, bis eine Überlast nicht mehr gegeben ist, oder ein Betrieb des Telekommunikationsnetzwerkes nicht mehr möglich ist.

9. System umfassend eine Telekommunikationssteuereinheit zur raumzeitlichen Steuerung der Elektroenergieaufnahme eines Telekommunikationsnetzes in Abhängigkeit von Zuständen in einem Stromnetz, das für die Versorgung des Telekommunikationsnetzes in dem Raum und der Zeit zuständig ist, wobei das Stromnetz eine zentrale Stromnetzüberwachungseinheit aufweist, die den Betriebszustand von zumindest einem Teil der Komponenten im Stromnetz überwacht,
wobei die Telekommunikationssteuereinheit ausgebildet ist, um zumindest einen Teil der Telekommunikationsnetzwerkkomponenten im Telekommunikationsnetzwerk zu steuern, wobei die Stromnetzüberwachungseinheit und die Telekommunikationssteuereinheit miteinander über ein Netzwerk verbunden sind, um digital Informationen auszutauschen, **dadurch gekennzeichnet, dass** das System ausgebildet ist, um bei
- Detektion einer Überlastung des Stromnetzes durch eine zu hohe Stromversorgung durch Austausch von Informationen zwischen der Stromnetzüberwachungseinheit und der Telekommunikationssteuereinheit, ein Erhöhen des Stromverbrauchs des Telekommunikationsnetzwerks in dem räumlichen Bereich zu steuern, durch Konfiguration der Telekommunikationsnetzwerkkomponenten in diesem räumlichen Bereich für den Zeitraum der zu hohen Stromversorgung.

10. System nach dem vorhergehenden Anspruch, **dadurch gekennzeichnet, dass** bei einer Detektion einer Überlastung des Stromnetzes durch zu geringe Stromversorgung in einem räumlichen Bereich, durch Austausch von Informationen zwischen der Stromnetzüberwachungseinheit und der Telekommunikationssteuereinheit, um eine Verringern des Stromverbrauchs des Telekommunikationsnetzwerks in dem räumlichen Bereich zu steuern, durch Konfiguration der Telekommunikationsnetzwerkkomponenten in diesem räumlichen Bereich für den Zeitraum der geringen Stromversorgung; und um bei

11. System nach einem oder mehreren der vorhergehenden Systemansprüche, **dadurch gekennzeichnet, dass** eine Verringerung des Stromverbrauchs der Telekommunikationsnetzwerkkomponenten, erreichbar ist durch eine oder mehrere der folgenden Konfigurationen:
- Abkoppeln der Telekommunikationsnetzwerkkomponente vom Stromnetz und Betrieb durch eine USV, unterbrechungsfreie Stromversorgung;
- Einspeisen von USV Energie in das Stromnetz;
- Verändern eines Routings von Kommunikationsinformationen, um die Kommunikationsinformationen um den räumlichen Bereich herumzuleiten;
- Abschalten von redundanten Komponenten in den Telekommunikationsnetzwerkkomponenten in dem räumlichen Bereich;
- Reduzierung der Übertragungsgeschwindigkeiten in den Telekommunikationsnetzwerkkomponenten in dem räumlichen Bereich.

12. System nach dem vorhergehenden Systemanspruch, **dadurch gekennzeichnet, dass** eine Erhöhung des Stromverbrauchs der Telekommunikationsnetzwerkkomponenten, erreichbar ist, durch eine oder mehrere der folgenden Konfigurationen:
- Zuschalten von USVs, um diese vollständig aufzuladen; - Verändern eines Routings von Kommunikationsinformationen um die Kommunikationsinformationen durch den räumlichen Bereich zu leiten;
- Zuschalten von redundanten Komponenten in den Telekommunikationsnetzwerkkomponenten in dem räumlichen Bereich;
- Erhöhung der Übertragungsgeschwindigkeiten in den Telekommunikationsnetzwerkkomponenten in dem räumlichen Bereich;
- Aktivierung von Blindlasten.

13. System nach einem oder mehreren der vorhergehenden zwei Systemansprüche, wobei die Auswahl der Konfiguration abhängig ist, von der zeitlich zu erwartenden Überlastung, wobei die zeitliche Überlastung durch ein Prognosemodul prognostizierbar ist, um die Überlastsituation vorherzusehen, um dadurch die Konfiguration frühzeitig einzuleiten, insbesondere, wobei das Prognosemodul ausgebildet ist, um ebenfalls den räumlichen Bereich vorherzusagen.

14. System nach einem oder mehreren der vorhergehenden Systemansprüche, wobei die Telekommunikationssteuereinheit ausgebildet ist, um die Betriebsparameter sowohl des Telekommunikations- wie des Stromnetzes als Funktion von Ort x und Zeit t zu erfassen, um basierend auf dieser Funktion die Detektion vorzunehmen.

15. System nach einem oder mehreren der vorhergehenden Systemansprüche, wobei die Stromnetzüberwachungseinheit ausgebildet ist, um eine abgegebene Leistung, Power Quality-Parameter, wie Frequenz, Phasenwinkel zu erfassen, um eine Detektion zu ermöglichen.

16. System nach einem oder mehreren der vorhergehenden Systemansprüche, ausgebildet, um in einem Regelkreislauf bei Überlast weitere Konfigurationen vorzunehmen, bis eine Überlast nicht mehr gegeben ist. oder ein Betrieb des Telekommunikationsnetzwerkes nicht mehr möglich ist.

## Claims

1. Method for spatiotemporal control of electrical energy consumption of a telecommunications network dependent on conditions in a power grid that is responsible for supplying the telecommunications network in space and time, the power grid having a central power grid monitoring unit, which monitors the operating condition of at least a part of the components in the power grid, and the telecommunications network having a telecommunications control unit, which controls at least a part of the telecommunications network components in the telecommunications network, the power grid monitoring unit and the telecommunications control unit being connected to each other via a network in order to exchange digital information, **characterized by** the following steps:
- When detecting an overload on the power grid due to too high power supply by exchanging of information between the power grid monitoring unit and the telecommunications control unit, increasing the power consumption by the telecommunications network in the spatial area, through configuration of the telecommunications network components in this spatial area by the power grid monitoring unit for the period of too high power supply.

2. The method according to the preceding claim wherein with detection of an overload in the power grid due to too low power supply in a spatial area by exchanging information between the power grid monitoring unit and the telecommunications control unit, reduction of power consumption of the telecommunications network in the spatial area, through configuration of the telecommunications network components in this spatial area by the power grid monitoring unit for the period of low power supply;
and

3. The method according to one of the preceding claims **characterised in that** a reduction in power consumption of the telecommunications network components can be achieved through one or more of the following configurations:
- disconnecting the telecommunications network components from the power grid and operating through a UPS, uninterruptible power supply;
- feeding UPS energy into the power grid;
- changing a routing of communications information in order to re-route the communications information around the spatial area;
- switching off redundant components in the telecommunications network components in the spatial area;
- reducing transmission speeds in the telecommunications network components in the spatial area.

4. The method according to the preceding claim 1 **characterised in that** an increase in power consumption of the telecommunications network components can be achieved through one or more of the following configurations:
- switching on UPSs in order to fully charge them;
- changing a routing of communications information in order to route the communications information through the spatial area;
- switching on redundant components in the telecommunications network components in the spatial area;
- increasing transmission speeds in the telecommunications network components in the spatial area;
- activation of reactive loads.

5. The method according to any of the preceding two claims, wherein the selection of the configuration being dependent on the temporal overload, the temporal overload being predicted by a forecast module in order to predict the overload situation in order thereby to introduce the configuration in good time, in particular wherein the forecast module also predicting the spatial area.

6. The method according to any of the preceding claims, wherein the power grid monitoring unit and/or the telecommunications control unit recording the operating parameters both of the telecommunications network and the power grid as a function of place x and time t in order to undertake detection based on this function.

7. The method according to any of the preceding claims, wherein the power grid monitoring unit is recording the output power, power quality parameters, such as frequency, phase angle, in order to enable detection.

8. The method according to any of the preceding claims, wherein further configurations being undertaken in a control circuit in the case of overload until an overload no longer exists, or the telecommunications network can no longer be operated.

9. System comprising a telecommunications control unit for spatiotemporal control of electrical energy consumption of a telecommunications network depending on conditions in a power grid that is responsible for supplying the telecommunications network in space and in time, the power grid having a central power grid monitoring unit, which monitors the operating condition of at least a part of the components in the power grid, the telecommunications control unit being configured to control at least a part of the telecommunications network components in the telecommunications network, the power grid monitoring unit and the telecommunications control unit being connected to each other via a network in order to exchange digital information, **characterized in that** the system is configured to
- detect an overload on the power grid due to too high power supply by exchanging of information between the power grid monitoring unit and the telecommunications control unit, increase in power consumption by the telecommunications network in the spatial area, through configuration of the telecommunications network components in this spatial area by the power grid monitoring unit for the period of too high power supply.

10. System according to the preceding system claim **characterized in that** wherein with detection of an overload in the power grid due to too low power supply in a spatial area by exchanging information between the power grid monitoring unit and the telecommunications control unit, reduction of power consumption of the telecommunications network in the spatial area, through configuration of the telecommunications network components in this spatial area by the power grid monitoring unit for the period of low power supply;
and/or to

11. System according to the preceding system claim **characterised in that** a reduction in power consumption of the telecommunications network components is achievable through one or more of the following configurations:
- disconnecting the telecommunications network components from the power grid and operating through a UPS, uninterruptible power supply;
- feeding UPS energy into the power grid;
- changing a routing of communications information in order to re-route the communications information around the spatial area;
- switching off redundant components in the telecommunications network components in the spatial area;
- reducing transmission speeds in the telecommunications network components in the spatial area.

12. System according to the preceding system claim **characterised in that** an increase in power consumption of the telecommunications network components is achievable through one or more of the following configurations:
- switching on UPSs in order to fully charge them;
- changing a routing of communications information in order to route the communications information through the spatial area;
- switching on redundant components in the telecommunications network components in the spatial area;
- increasing transmission speeds in the telecommunications network components in the spatial area;
- activation of reactive loads.

13. System according to any of the preceding two system claims, wherein the selection of configuration being dependent on the expected temporal overload, the temporal overload being predictable by a forecast module in order to predict the overload situation in order thereby to introduce the configuration in good time, in particular, wherein the forecast module being configured also to predict the spatial area.

14. System according to any of the preceding system claims, wherein the telecommunications control unit being configured to record the operating parameters both of the telecommunications network and the power grid as a function of place x and time t in order to undertake detection based on this function.

15. System according to any of the preceding system claims, wherein the power grid monitoring unit being configured to record an output power, power quality parameters, such as frequency, phase angle, in order to enable detection.

16. System according to any of the preceding system claims being configured in order to undertake further configurations in a control circuit in the event of overload until an overload no longer exists or the telecommunications network can no longer be operated.

## Revendications

1. Un procédé de commande dans l'espace et dans le temps de la consommation d'énergie électrique d'un réseau de télécommunications dépendant de conditions d'un réseau électrique qui est responsable pour l'alimentation du réseau de télécommunications dans l'espace et le temps, le réseau électrique ayant une unité de surveillance d'un réseau électrique centralisée, laquelle surveille le fonctionnement d'au moins une partie des composants du réseau électrique, et le réseau de télécommunications ayant une unité de commande de télécommunications, qui commande au moins une partie des composants du réseau de télécommunications dans le réseau de télécommunications, l'unité de surveillance du réseau électrique et l'unité de commande des télécommunications étant connectées l'une à l'autre via un réseau afin d'échanger de l'information numérique, **caractérisé par** les étapes suivantes :
- grâce à un échange d'information entre l'unité de surveillance du réseau électrique et l'unité de commande de télécommunications lors de la détection d'une surcharge sur le réseau électrique résultant d'une alimentation électrique excessive, un accroissement de la consommation électrique du réseau de télécommunications dans l'espace au travers la configuration des composants du réseau de télécommunication dans cet espace au moyen de l'unité de surveillance du réseau électrique pendant la durée de consommation électrique en surcharge.

2. Le procédé selon la revendication précédente dans lequel en même temps que la détection d'une surcharge du réseau électrique en raison d'une alimentation trop faible dans la zone spatiale détectée par un échange d'informations entre l'unité de surveillance du réseau électrique et l'unité de commande de télécommunications, on réduit la consommation électrique du réseau de télécommunications dans la zone spatiale, par la configuration des composants du réseau de télécommunications dans cette zone spatiale au moyen de l'unité de surveillance du réseau électrique pendant la durée d'alimentation insuffisante.

3. Le procédé selon l'une des revendications précédentes **caractérisé en ce qu'**une réduction de la consommation électrique des composants du réseau de télécommunications est obtenue par une ou plusieurs configurations suivantes :
- la déconnexion des composants du réseau de télécommunication du réseau électrique et le fonctionnement au travers un alimentation électrique non interruptible, UPS;
- l'alimentation d'énergie USP à l'intérieur du réseau électrique ;
- la modification d'un routage d'informations de communications afin de re-router les informations de communications autour de la zone spatiale ;
- l'extinction de composants redondants au sein de l'ensemble des composants du réseau de télécommunications dans la zone spatiale ;
- la réduction des vitesses de transmission dans les composants du réseau de télécommunications au sein de la zone spatiale.

4. Le procédé selon la revendication précédente n°1, **caractérisé en ce que** un accroissement de la consommation électrique des composants du réseau de télécommunications peut être obtenu par une ou plusieurs des configurations suivantes :
- la mise en fonctionnement de UPSs afin de permettre une recharge complète de ceux ci ;
- la modification d'un routage d'informations de communication dans le but de route l'information de communication dans la zone spatiale ;
- la mise en fonctionnement des composants redondants au sein de l'ensemble des composants du réseau de télécommunication dans la zone spatiale ;
- l'accroissement des vitesses de transmission des composants du réseau de télécommunications dans la zone spatiale ;
- l'activation de charges réactives.

5. Le procédé selon l'une quelconque des deux revendications précédentes, dans lequel la sélection de la configuration dépendante de la surcharge temporelle, la surcharge temporelle est un module de prévision pour prédire une situation de surcharge afin de permettre l'introduction, en conséquence, de la configuration en temps utile, en particulier dans lequel le module de prévision prédits également la zone spatiale.

6. Le procédé selon l'une des revendications précédentes, dans lequel l'unité de surveillance du réseau électrique et/ou l'unité de commande du réseau de télécommunications enregistrent les paramètres de fonctionnement du réseau de télécommunication ainsi que du réseau électrique en fonction de la position x et du temps t pour permettre une détection basée sur cette fonction.

7. Le procédé selon l'une des revendications précédentes, dans lequel l'unité de surveillance du réseau électrique enregistre la puissance de sortie, les paramètres de suivi de qualité électrique, tels que la fréquence, l'angle de phase pour permettre la détection.

8. Le procédé selon l'une des revendications précédentes, dans lequel d'autres configurations sont mises en oeuvre au sein d'un circuit de commande dans le cas d'une surcharge jusqu'au terme de la surcharge, ou lorsque le réseau de télécommunication n'est plus apte à fonctionner.

9. Un système comprenant une unité de commande de télécommunications pour une commande dans l'espace et le temps de la consommation d'énergie électrique d'un réseau de télécommunications dépendant de conditions d'un réseau électrique qui est responsable pour l'alimentation du réseau de télécommunications dans l'espace et le temps, le réseau électrique ayant une unité de surveillance d'un réseau électrique centralisée, laquelle surveille le fonctionnement d'au moins une partie des composants du réseau électrique, et l'unité de commande de télécommunications est configurée pour commander au moins une partie des composants du réseau de télécommunications dans le réseau de télécommunications, l'unité de surveillance du réseau électrique et l'unité de commande des télécommunications étant connectées l'une à l'autre via un réseau afin d'échanger de l'information numérique, **caractérisé en ce que** le système est configuré pour :
- détecter une surcharge du réseau électrique résultant d'une alimentation électrique excessive au moyen d'un échange d'informations entre l'unité de surveillance du réseau électrique et l'unité de commande de télécommunications, et l'accroissement de la consommation électrique du réseau de télécommunications dans l'espace au travers la configuration des composants du réseau de télécommunication dans cet espace au moyen de l'unité de surveillance du réseau électrique pendant la durée de consommation électrique en surcharge.

10. Le système selon la revendication de système précédente, caractérisé en ce, en même temps que la détection d'une surcharge du réseau électrique en raison d'une alimentation trop faible dans la zone spatiale détectée par un échange d'informations entre l'unité de surveillance du réseau électrique et l'unité de commande de télécommunications, on réduit la consommation électrique du réseau de télécommunications dans la zone spatiale, par la configuration des composants du réseau de télécommunications dans cette zone spatiale au moyen de l'unité de surveillance du réseau électrique pendant la durée d'alimentation insuffisante.

11. Le système selon la revendication de système précédente, **caractérisé en ce qu'**une réduction de la consommation électrique des composants du réseau de télécommunications est obtenue par une ou plusieurs configurations suivantes :
- la déconnexion des composants du réseau de télécommunication du réseau électrique et le fonctionnement au travers un alimentation électrique non interruptible, UPS;
- l'alimentation d'énergie USP à l'intérieur du réseau électrique ;
- la modification d'un routage d'informations de communications afin de re-router les informations de communications autour de la zone spatiale ;
- l'extinction de composants redondants au sein de l'ensemble des composants du réseau de télécommunications dans la zone spatiale ;
- la réduction des vitesses de transmission dans les composants du réseau de télécommunications au sein de la zone spatiale.

12. Le système selon la revendication de système précédente, **caractérisé en ce qu'**un accroissement de la consommation électrique des composants du réseau de télécommunications peut être obtenu par une ou plusieurs des configurations suivantes :
- la mise en fonctionnement de UPS afin de permettre une recharge complète de ceux ci ;
- la modification d'un routage d'informations de communication dans le but de route l'information de communication dans la zone spatiale ;
- la mise en fonctionnement des composants redondants au sein de l'ensemble des composants du réseau de télécommunication dans la zone spatiale ;
- l'accroissement des vitesses de transmission des composants du réseau de télécommunications dans la zone spatiale ;
- l'activation de charges réactives.

13. Le système selon l'une quelconque des deux revendications de système précédentes, dans lequel la sélection de la configuration dépendante de la surcharge temporelle, la surcharge temporelle est un module de prévision pour prédire une situation de surcharge afin de permettre l'introduction, en conséquence, de la configuration en temps utile, en particulier dans lequel le module de prévision prédits également la zone spatiale.

14. Le système selon l'une quelconque des revendications de système précédentes, dans lequel l'unité de commande du réseau de télécommunications est configurée pour enregistrer les paramètres de fonctionnement du réseau de télécommunication ainsi que du réseau électrique en fonction de la position x et du temps t pour permettre une détection basée sur cette fonction.

15. Le système selon l'une quelconques des revendications de système précédentes, dans lequel l'unité de surveillance du réseau électrique enregistre la puissance de sortie, les paramètres de suivi de qualité électrique, tels que la fréquence, l'angle de phase pour permettre la détection.

16. Le système selon l'une quelconque des revendications de système précédentes, configurés pour entreprendre des configurations additionnelles au sein d'un circuit de commande dans l'éventualité d'une surcharge jusqu'au terme de cette surcharge ou l'arrêt de fonctionnement du réseau de télécommunications.
